# EUROPÄISCHE PATENTSCHRIFT

(11) **EP 1 546 571 B1**
(45) Veröffentlichungstag und Bekanntmachung des Hinweises auf die Patenterteilung: **12.04.2006**
(21) Anmeldenummer: 03773631.1
(22) Anmeldetag: 23.09.2003
(51) Int. Cl.: F16D 65/14, F16D 65/56, F16D 65/38

(54) **PNEUMATISCH BETÄTIGTE SCHEIBENBREMSE MIT NACHSTELLEINRICHTUNG**
PNEUMATICALLY ACTUATED DISK BRAKE COMPRISING AN ADJUSTMENT DEVICE
FREIN A DISQUE A COMMANDE PNEUMATIQUE DOTE D'UN DISPOSITIF DE RATTRAPAGE

(30) Priorität: 23.09.2002 DE 10244152; 12.09.2003 DE 10342281
(43) Veröffentlichungstag der Anmeldung: 29.06.2005
(73) Patentinhaber: KNORR-BREMSE SYSTEME FÜR NUTZFAHRZEUGE GMBH, 80809 München (DE)
(72) Erfinder: BIEKER, Dieter, 83080 Oberaudorf (DE); BAUMGARTNER, Johann, 85368 Moosburg (DE)
(74) Vertreter: Mattusch, Gundula
(86) Internationale Anmeldenummer: PCT/EP2003/010554
(87) Internationale Veröffentlichungsnummer: WO 2004/029474

(56) Entgegenhaltungen:
- EP-A- 0 566 006
- EP-B- 0 688 404
- DE-A- 19 756 519

## Beschreibung

Die Erfindung betrifft eine Scheibenbremse nach dem Oberbegriff des Anspruchs 1.

Aus der EP 0 688 404 B1 ist eine Schiebesattel-Scheibenbremse bekannt, bei welcher auf einer Seite des Bremssattels eine Zuspannvorrichtung mit einem Drehhebel angeordnet, der um eine zur Ebene der Bremsscheibe parallel verlaufende Drehachse schwenkbar gelagert ist. Bremsscheibenzugewandt liegt dieser mittels eines Exzenters an einer Traverse an, die bezüglich der Bremsscheibe verschiebbar geführt ist und in der zwei mit einem Außengewinde versehene Stellspindeln in Parallelanordnung verstellbar verschraubt sind. Die Nachstelleinrichtung weist einen mechanischen Nachstellmechanismus auf, welcher mit dem Drehhebel gekoppelt ist.

Es ist ferner auch bekannt, die Nachstelleinrichtung nicht mit dem Drehhebel zu koppeln sondern als Antrieb der Nachstelleinrichtung einen Elektromotor zu nutzen. Einer oder mehrere Elektromotoren als Antrieb für die Nachstelleinrichtung bieten sich insbesondere an, wenn auf einer Seite der Bremsscheibe zwei oder wenn auf beiden Seiten einer Bremsscheibe jeweils eine oder zwei Nachstelleinrichtungen angeordnet werden sollen, da über eine elektronische Ansteuerung der Motoren die Möglichkeit dazu besteht, die Nachstellbewegungen der einzelnen Nachstelleinrichtungen auf einfache Weise miteinander zu synchronisieren.

Die Aufgabe der Erfindung ist die Schaffung einer weiteren Alternative zur Kopplung der Nachstelleinrichtung mit der Zuspannbewegung des Drehhebels und zur elektromotorischen Betätigung der Nachstelleinrichtung. Insbesondere soll es auch möglich sein, bei einer Scheibenbremse mit mehr als einer Nachstelldreheinrichtung diese Nachstelleinrichtungen auf besonders einfache konstruktive Weise miteinander zu synchronisieren.

Die Erfindung löst diese Aufgabe durch den Gegenstand des Anspruches 1. Danach ist vorgesehen, dass die Nachstelleinrichtung wenigstens eine unabhängig von der Zuspanneinrichtung direkt mittels Druckluft betätigbare Nachstelleinheit aufweist.

Die Druckluftbetätigung der Nachstelleinrichtung macht einen elektrischen Anschluss an der Scheibenbremse unnötig, obwohl prinzipiell auch die Möglichkeit dazu besteht, die pneumatische Betätigung mit einer elektronischen Steuerungseinrichtung zu verbinden, sei es nur, um beispielsweise den Verschleiß der Bremsbeläge zu überwachen oder aber, um die Betätigung der Nachstelleinheiten elektronisch "intelligent" zu steuern.

Zweckmäßig ist der Bremssattel als Festsattel und die Bremsscheibe zumindest im Bereich ihres Reibringes axial beweglich ausgebildet oder verschieblich auf einer Radachse angeordnet. Insbesondere ist die Bremsscheibe in konstruktiv einfacher Weise lediglich um den Weg des Arbeitshubes zumindest im Bereich ihres Reibringes axial beweglich ausgebildet oder verschieblich auf einer Radachse angeordnet.

Vorteilhaft ist beidseits der Bremsscheibe wenigstens eine, vorzugsweise zwei, der pneumatisch betätigbaren Nachstelleinheitea angeordnet, wobei mehrere der Nachstelleinheiten mittels Druckluftleitungen oder -passagen miteinander in Wirkverbindung stehen. Damit wird eine Synchronisation mittels einer Mechanik mit beweglichen Teilen eingespart, obwohl sie optional realisierbar ist. Insbesondere ist es auch besonders einfach möglich, die auf den gegenüberliegenden Seiten einer Bremsscheibe angeordnete Nachstelleinheiten miteinander zu synchronisieren.

Nach einer besonders bevorzugten Ausführungsform werden die Nachstellbewegungen in Pausen zwischen Bremsungen durch Belüften der Druckräume der Nachstelleinheiten durchgeführt, Hierbei bietet es sich an, wenn die Druckstange und der Kolben jeder Nachstelleinheit bei Zuspannbewegungen relativ zueinander unverdrehbar und bei Nachstellbewegungen relativ zueinander verdrehbar sind.

Vorteilhafte Ausgestaltungen der Erfindung sind den Unteransprüchen zu entnehmen.

Nachfolgend wird die Erfindung unter Bezug auf die beigefügten Figuren näher erläutert. Es zeigt:
- Figur 1: einen Schnitt durch eine erfindungsgemäße Scheibenbremse senkrecht zur Bremsscheibenebene;
- Figur 2: einen weiteren, zu dem Schnitt der Fig. 1 senkrechten Schnitt durch die Scheibenbremse aus Fig. 1 mit im rechten Teil der Fig. unverschlissen und im rechten Teil der Fig. verschlissen dargestellten Bremsbelägen;
- Figur 3: eine Ausschnittsvergrößerung einer Nachstelleinheit bei neuen Bremsbelägen; und
- Figur 4: die Nachstelleinheit aus Fig. 3 in der verschlissenen Bremsbelägen entsprechenden Betriebsstellung.

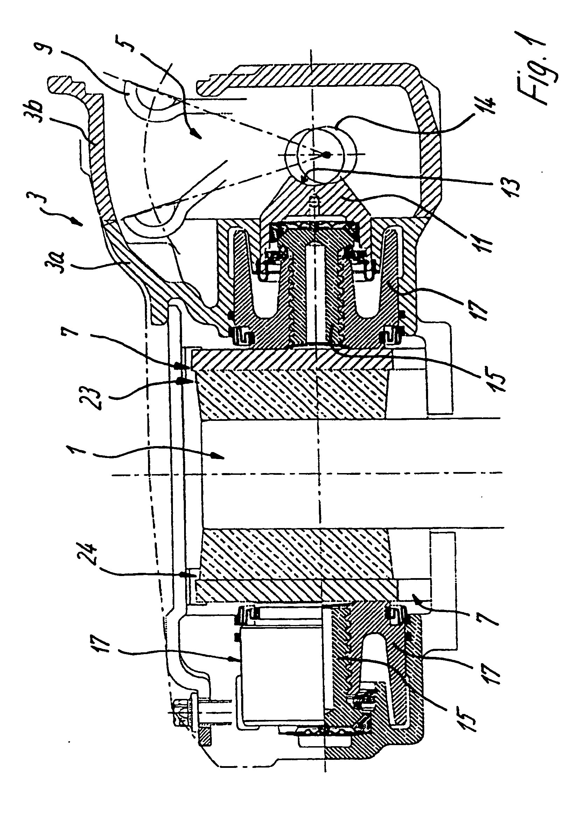

Fig. 1 zeigt einen Schnitt durch eine pneumatisch betätigte Festsattel-Scheibenbremse mit einem zweiteiligen Bremssattel 3, der eine auf der Radachse verschiebbar angeordnete Bremsscheibe 1 übergreift. Die beiden Bremssattelteile 3a, 3b sind vorzugsweise mittels hier nicht erkennbarer Schraubbolzen miteinander verbunden. Das erste Bremssattelteil 3a fasst die Bremsscheibe 1 in ihrem oberen Umfangsbereich rahmenartig ein und das zweite Bremssattelteil 3b dient zur Aufnahme einer Zuspannvorrichtung 5.

Alternativ kann der Bremssattel 3 auch einteilig ausgebildet sein (hier nicht dargestellt). Das Prinzip des Festsattels ist als besonders bevorzugte Ausführungsform zu verstehen. Das pneumatisch betätigte Nachstellsystem ist aber prinzipiell auch für Scheibenbremsen z.B. mit einem Schiebe- oder Schwenksattel geeignet.

Zur Bremsscheibe 1 hin ist in dem Bremssattelteilen 3a beidseits der Bremsscheibe jeweils ein Belagschacht 7 ausgebildet, in die ein Kolben 17 im Bremssattel eingreift.

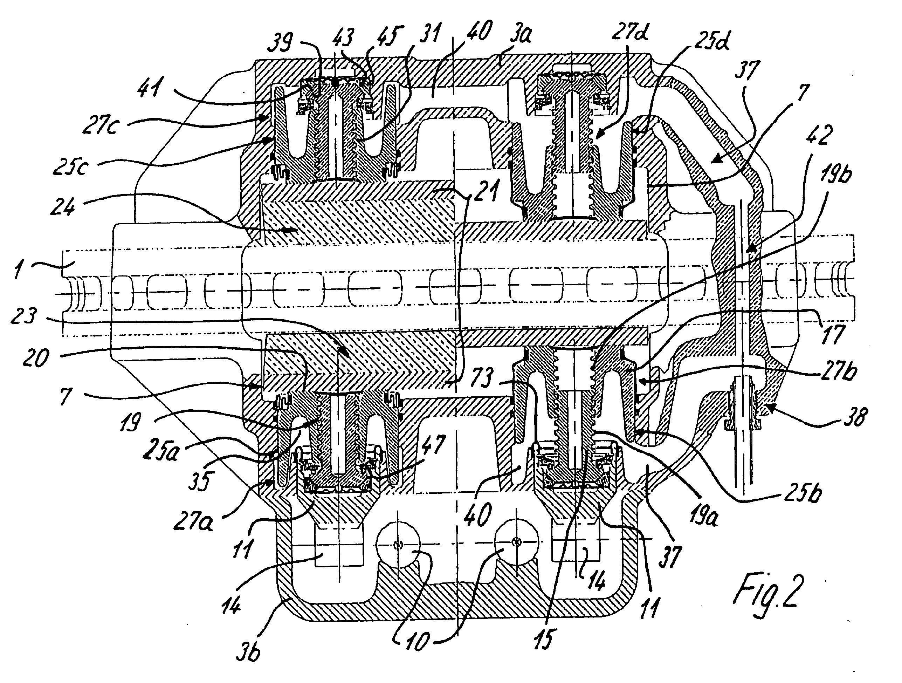

Die Zuspannvorrichtung 5 weist einen von einer (hier nicht dargestellten) Kolbenstange eines pneumatisch betätigten Druckluftzylinders betätigbaren - hier nur angedeuteten - Exzenter-Drehhebel 9 auf, welcher z.B. über in Fig. 2 angedeutete Lagerelemente wie Kugeln 10 und zusätzliche Gleitlagerschalen oder über eine Walze (ebenfalls nicht dargestellt) am Bremssattel 3 abgestützt ist. Der Drehhebel 9 wirkt an seiner vom Bremssattel 3 abgewandten Seite an einer mittigen Stelle oder - wie in Fig. 2 dargestellt - an zwei traversenartigen seitlichen Enden jeweils auf ein Zwischen- bzw. Abstützelement 11 ein, welches an seinem dem Drehhebel zugewandten Ende eine halbzylindrische Ausnehmung 13 aufweist, in welche ein exzentrischer walzenartiger Ansatz des Drehhebels 9 oder eine zwischen Ausnehmung 13 und Drehhebel 9 exzentrisch zur Drehachse des Drehhebels 9 angeordnete Druckwalze 14 eingreift.

Die Zwischenelemente 11 stützen sich über weitere, noch näher zu erläuternde Elemente jeweils an Stirnseiten von mit einem Außengewinde 19a versehenen Druckstangen 15 ab, auf die jeweils der mit einem Innengewinde 19b versehene Kolben 17 aufgeschraubt ist, wobei das Gewinde 19 zwischen der Druckstange 15 und dem Kolben 17 jeweils nichtselbsthemmend ausgelegt ist.

Die Kolben 17 weisen an den vom Drehhebel 1 abgewandten Enden jeweils eine Druckfläche 20 auf, die als Druckstück dient und an einer Belaghalteplatte 21 des zuspannseitigen Bremsbelages 23 anliegt.

Wird der Drehhebel 9 durch Vorschieben der hier nicht dargestellten Kolbenstange eines Druckluftbremszylinders verschwenkt, bewirkt das untere exzenterartige Ende (hier nicht zu erkennen) des Drehhebels 9 ein Vorschieben des Zwischenelementes 11 in Richtung der Bremsscheibe 1. Dabei werden jeweils die Druckstangen 15 und die Kolben 17 gemeinsam in Richtung des Bremsbelages 23 gedrückt und der zuspannseitige Bremsbelag 23 in Richtung der Bremsscheibe 1 verschoben. Bei fortschreitender Zuspannbewegung verschiebt sich sodann die Bremsscheibe 1 auf der Radachse in Richtung des reaktionsseitigen Bremsbelages 24, bis sie am reaktionsseitigen Bremsbelag 24 anliegt.

Die Kolben 17 sind axial beweglich jeweils in eine Ausnehmung 25 im Bremssattel 3 eingesetzt.

Die Einstellung des Lüftspieles erfolgt hier beidseits der Bremsscheibe 1 jeweils mit Hilfe von zwei jeweils parallel zueinander angeordneten, pneumatisch betätigten Nachstelleinheiten 27a-d, die als pneumatisch unabhängig von der Zuspanneinheit betätigbare Nachstelldrehantriebe ausgebildet sind.

Zwei der insgesamt vier Nachstelleinheiten 27 a und b sowie c und d sind dabei auf der von der Zuspannvorrichtung abgewandten Seite der Bremsscheibe 1- der Reaktionsseite - im Bremssattel 3 angeordnet. Auch diese Nachstelldrehantriebe 27c und weisen jeweils eine Druckstange 15 und einen Kolben 17 auf und ermöglichen es, das Lüftspiel auf der Reaktionsseite der Scheibenbremse auszugleichen.

Da auf jeder Stirnseite der Bremsscheibe 1 jeweils zwei Nachstelleinheiten 27 a und b sowie c und d angeordnet sind, ist es möglich, die Bremsscheibe 1 z.B. als eine Schiebescheibe auszubilden, deren Schiebeweg derart bemessen ist, dass mit ihr weniger als der maximale Nachstellweg, insbesondere sogar lediglich der maximale Arbeitshub beim Zuspannen der Bremse überbrückbar ist, da der Bremsbelagverschleiß durch die beidseitig der Bremsscheibe angeordneten Nachstelleinheiten 27 ausgeglichen wird.

Anders als bei bekannten Nachstelleinheiten für pneumatisch betätigte Scheibenbremsen mit einer Zuspannvorrichtung mittels Exzenterdrehhebel werden die Nachstelleinheiten nicht indirekt über ein Element der Zuspanneinrichtung - z.B. den Drehhebel 9 - mitbetätigt sondern sie werden unabhängig von der eigentlichen Zuspanneinrichtung 5 direkt pneumatisch bzw. mittels Druckluft betätigt.

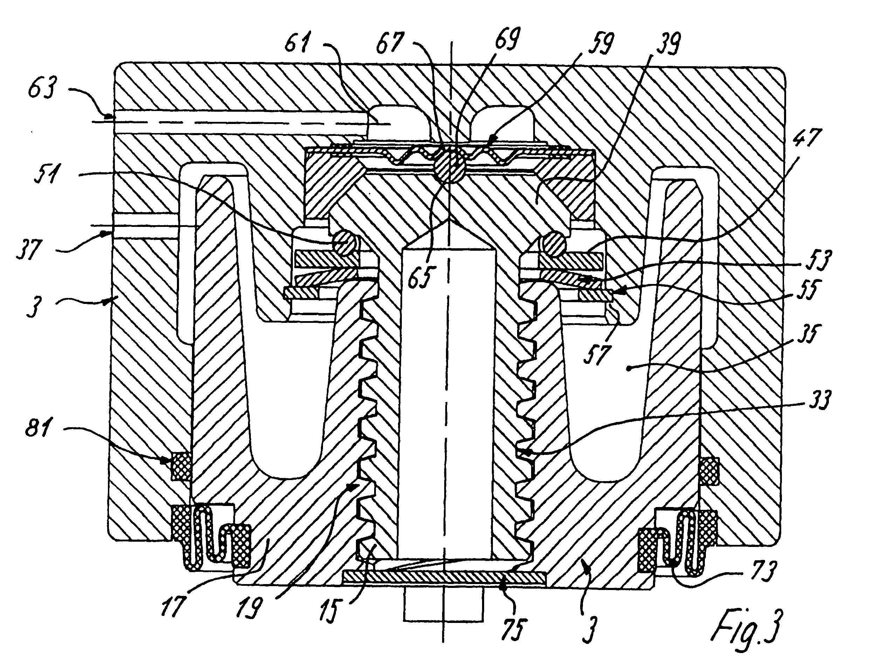

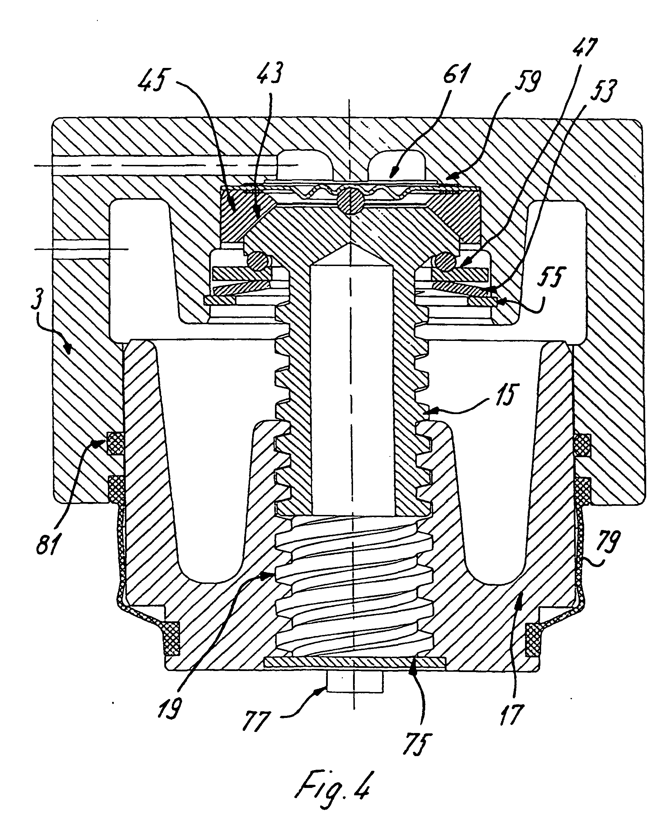

Hierzu weisen die Nachstelleinheiten 27a-d z.B. jeweils den in Fig. 3 und 4 vergrößert dargestellten konstruktiven Aufbau auf.

In Ausnehmungen 25-d im Bremssattel 3 ist jeweils einer der im Schnitt (im wesentlichen) u-förmigen Kolben 17 eingesetzt, wobei die Grundseite des U-förmigen Kolbens 17 zur Bremsscheibe 1 weist. Der Kolben 17 weist nach innen hin einen mittigen Ansatz 31 auf, welcher wiederum eine mit Innengewinde versehene Bohrung 33 aufweist, in welche die Druckstange 15 eingeschraubt ist.

An der von der Grundseite des U abgewandten Seite des Kolbens 17 ist die Ausnehmung 25 jeweils derart ausgestaltet, dass jeweils ein Druckraum 35 im Bremssattel oder zwischen den Zwischenelementen 11 und den Kolben 17 ausgebildet wird, in den auf beiden Seiten der Bremsscheibe eine im Bremssattel 3 ausgebildete Druckluftzuleitung 37 - z.B. eine Bohrung im Bremssattel 3 - mündet.

Die Druckluftzuleitungen 37 führen zu einem in Fig. 2 dargestellten Druckluftanschluß 38 an der Außenseite des Bremssattels 3.

Nach Fig. 1 und 2 stehen die Druckräume 35a und b sowie 35 c und d der beiden aktions- und reaktionsseitigen Nachstelleinheiten miteinander in Wirkverbindung - z.B. mittels Passagen 40 zwischen den Druckräumen 35 auf jeder Seite des Bremsbelages sowie über eine Druckluftleitung 42 von der Zuspannseite zur Reaktionsseite der Scheibenbremse, welche in die Druckluftzuleitungen 37 mündet - so dass die Kolben 17a-d der Nachstelleinheiten 27a-d gemeinsam mit Druckluft beaufschlagt werden.

Bei Bremsungen werden der Kolben 17 und die Druckstange 15 jeder Nachstelleinheit 27a-d ohne Relativerdrehung zueinander gemeinsam in Richtung der Bremsscheibe 1 verschoben.

Bei einer Lüftspieleinstellung wird dagegen der Druckraum 35 der Nachstelleinheit belüftet, was den Kolben 17 in Richtung der Bremsscheibe drückt. Gleichzeitig wird durch eine Drehung der Druckstange 15 erreicht, dass sich der Kolben 17 auf der Druckstange 15 axial in Richtung der Bremsscheibe 1 bewegt, um das Lüftspiel einzustellen bzw. um eine Nachstellung auszuführen.

Die Wirkung des Vorschiebens des Kolbens 17 auf der Druckstange 15 veranschaulicht ein Vergleich zwischen Fig. 3 und 4. So wurde in Fig. 4 der Kolben 17 im Vergleich zu Fig. 3 in Richtung der Bremsscheibe 1 bewegt, was den Verschleiß des Bremsbelages 23 ausgleicht. Analoges gilt für den rechten Teil der Fig. 2 im Vergleich zum linken Teil dieser Figur.

Um die Unverdrehbarkeit zwischen Druckstange 15 und Kolben 17 sowie der Relativverdrehbarkeit während der Nachstellbewegung zu realisieren, weisen die Nachstelleinheiten 27a-d jeweils noch weitere Elemente auf.

So ist die Druckstange 15 - wie in Fig. 3 zu erkennen - an ihrem von der Bremsscheibe 1 abgewandten Ende mit einem Ringansatz 39 versehen, welcher an der zur Bremsscheibe 1 weisenden Stirnseite eine Konusfläche 41 aufweist, die sich an einer entsprechend ausgestalteten Konusfläche 43 eines Stützlagerringes 45 abstützt, der auf der Zuspannseite am Zwischenelement 11 und auf der Reaktionsseite am Bremssattel 1 abgestützt ist.

Zwischen den Konusflächen 41, 43 ist eine hier nicht dargestellte (Mikro)Verzahnung ausgebildet, so daß die Druckstange 15 relativ zum Stützlagerring 43 unverdrehbar ist, wenn sie sich am Stützlagerring 43 abstützt. Auf diese Weise wird bei einer Krafteinleitung gegen den Konus (also im Bremszustand) verhindert, daß sich die Druckstange 15 verdrehen kann. Ist der Kolben 17 hierbei ebenfalls gegen ein Verdrehen gesichert, kann der volle Bremsdruck eingeleitet werden, denn Kolben 17 und Druckstange 15 sind gegeneinander blockiert.

Auf seiner vom Konus 41 abgewandten, ebenen Stirnseite stützt sich der Ringansatz 39 jeweils an einem Drucklager 47 ab, welches hier jeweils aus einer Scheibe 49 und mehreren zwischen der Scheibe 49 und der entsprechenden Stirnfläche des Ringansatzes 39 angeordneten Kugeln 51 besteht. Die Scheibe 49 liegt an ihrer von den Kugeln 51 abgewandten Seite an einer Tellerfeder 53 an, die sich wiederum an ihrer von der Scheibe 49 abgewandten Seite an einem Sicherungsring 55 abstützt, der in eine umlaufende Nut 57 im Bremssattel 1 oder Zwischenelement 11 eingreift und derart axial fixiert ist.

Die Funktion dieser Anordnung ist wie folgt.

Bei einer Nachstellung von Bremsbelagverschleiß werden die Druckräume 35 der Nachstelleinheiten 27 gemeinsam nach einer Bremsung belüftet. Dabei wird - wie bereits ausgeführt - der Kolben 17 in Richtung der Bremsscheibe 1 gedrückt. Der Kolben drückt dabei die Druckstange aufgrund des zwischen den beiden Elementen ausgebildeten nichtselbsthemmenden Gewindes 19 mit in Richtung der Bremsscheibe 1, was die Druckstange 15 aus der Verzahnung zwischen den Konusflächen 43 45 löst.

Andererseits ist die axiale Bewegung der Druckstange 15 in Richtung der Bremsscheibe 1 durch das am Sicherungsring 55 abgestützte Drucklager 47 begrenzt, so daß die Druckstange 15 anfängt, sich am,Drucklager 49 zu drehen. Dies schraubt die Druckstange 17 in Richtung des Bremsbelages vor.

Die Größe des Lüftspieles muß im axialen Gewindespiel, bei der Höhe der Verzahnung und bei der Begrenzung des Federweges der Tellerfeder berücksichtigt werden..

In jeder Nachstelleinheit 27a-d ist axial hinter den von der Bremsscheibe abgewandten axialen Ende der Druckstangen 15 im Bereich hinter den Stützlagerringen eine Metall-Membrane 59 und wenigstens eine Dichtung angeordnet. Hinter der Metallmembrane 59 ist ferner in axialer Verlängerung der Druckstange ein zweiter Druckraum 61 im Bremssattel 1 ausgebildet, in den eine weitere Druckluftzuleitung 63 im Bremssattel 3 mündet, die beispielsweise mit einem weiteren Druckluftanschluß an der Außenseite des Bremssattels verbunden ist. Zwischen der gewellten Metall-Membrane 59 und der Druckstange 15 ist ferner eine in eine zentrische Ausnehmung 65 auf der Stirnseite der Druckstange 15 und in eine zentrische Ausnehmung 67 der Metallmembrane 59 eingreifende Kugel 69 angeordnet.

Bei einem Belagwechsel wird der zweite Druckraum 61 belüftet, was wiederum die Druckstange 15 von dem Stützlagerring abhebt, so dass sich die Druckstange 15 leichtgängig drehen lässt, was es erlaubt, bei einem Belagwechsel die Kolben 17 in Richtung des Bremssattels 1 zurückzuschieben. Es ist denkbar, den zweiten Druckluftanschluß aus Sicherheitsgründen nur im Servicefall zu aktivieren oder an eine Druckluftversorgung anzuschliessen.

Die Zwischenstücke 11 weisen jeweils auf ihrer zur Bremsscheibe 1 gewandten Seite eine zylindrische Ausnehmung 71 zur Aufnahme der von der Bremsscheibe abgewandten Enden der Druckstangen 15 und der Elemente mit den Bezugszeichen 39 - 69 auf der Zuspannseite der Bremsscheibe auf.
Die Elemente der Nachstelleinheiten 27a und b sowie 27 c und d sind mit Ausnahme der Druckwalzen 14 und Zwischenstücke 11 zum Exzenterdrehhebel auf der Zuspannseite der Scheibenbremse gleich ausgebildet. Wichtig ist, daß das Zwischenstück 11 - Z.B. durch die Druckwalzen 14 - verdrehgesichert ist.

Zu erwähnen sind noch folgende weitere Elemente der Nachstelleinheit 27a und/oder 27 c und d.

Zwischen dem bremsscheibenzugewandten Enden der Zwischenstücke 11 und der das Zwischenstück aufnehmenden Bremssattelwandungen ist zur Abdichtung des Druckraumes 35a, b jeweils ein Rollbalg 73 angeordnet, so daß ein axiales Verschieben der Zwischenstücke 11 im Bremssattel 3 realisierbar ist.

Die Bohrung 33 im Kolben 17 ist mit Hilfe einer Verschlussscheibe 75 an der den Bremsbelägen zugewandten Seite verschlossen.

Die Verdrehsicherung für die Kolben 17 wird jeweils durch entsprechende korrespondierende Mittel zur Verdrehsicherung zwischen den Belaghalteplatten und den Kolben 17 realisiert, z.B. jeweils durch einen nichtzylindrischen Vorsprung 77 am Zwischenstück , der in eine entsprechende Ausnehmung (hier nicht dargestellt) in der zugeordneten Belaghalteplatte 21 formschlüssig eingreift.

Ein roll- oder faltenbalgartige Kappe 79 dient zur Abdeckung des Spaltes zwischen dem Umfang der Kolben 17 und dem Bremssattel 3 an den der Bremsscheibe zugewandten Endbereichen der Kolben 17.

Im Spalt ist ferner jeweils ein umlaufender Dichtring 81 zur Abdichtung der Druckraumes 35 angeordnet.

### Bezugszeichen

- Bremsscheibe: 1
- Bremssattel: 3
- Bremssattelteile: 3a, 3b
- Zuspannvorrichtung: 5
- Öffnung: 7
- Drehhebel: 9
- Kugeln: 10
- Zwischen- bzw. Abstützelement: 11
- Ausnehmung: 13
- Druckwalze: 14
- Druckstange: 15
- Kolben: 17
- Gewinde: 19
- Außengewinde: 19a
- Innengewinde: 19b
- Druckfläche: 20
- Belaghalteplatte: 21
- Bremsbelag: 23
- Ausnehmung: 25
- Nachstelleinheiten: 27a-d
- Mittiger Ansatz: 31
- Bohrung: 33
- Druckraum: 35
- Druckluftzuleitung: 37
- Druckluftanschluss: 38
- Ringansatz: 39
- Passagen: 40
- Konusfläche: 41
- Druckluftleitung: 42
- Konusfläche: 43
- Stützlagerring: 45
- Drucklager: 47
- Scheibe: 49
- Kugeln: 51
- Tellerfeder: 53
- Sicherungsring: 55
- umlaufende Nut: 57
- Metall-Membrane: 59
- zweiter Druckraum: 61
- Druckluftzuleitung: 63
- Ausnehmung: 65
- Ausnehmung: 67
- Kugel: 69
- Ausnehmung: 71
- Rollbalg: 73
- Verschlussscheibe: 75
- Vorsprung: 77
- Kappe: 79
- Dichtring: 81

## Patentansprüche

1. Pneumatisch betätigte Scheibenbremse, insbesondere für Nutzfahrzeuge , mit
a) einem eine Bremsscheibe (1) übergreifenden ein- oder mehrteiligen, relativ zu einer Radachse oder -nabe verschwenk- oder verschiebbaren Bremssattel (3),
b) einer im Bremssattel (3) angeordneten Zuspanneinrichtung (5) zum Zuspannen der Bremse;
c) wenigstens einer Nachstellvorrichtung zum Ausgleich von Bremsbelagverschleiß,
**dadurch gekennzeichnet, dass**
d) die Nachstelleinrichtung wenigstens eine unabhängig von der Zuspanneinrichtung direkt mittels Druckluft betätigbare Nachstelleinheit (27) aufweist.

2. Scheibenbremse nach Anspruch 1, **dadurch gekennzeichnet, dass** der Bremssattel als Festsattel und die Bremsscheibe (1) zumindest im Bereich ihres Reibringes axial beweglich ausgebildet oder verschieblich auf einer Radachse angeordnet ist.

3. Scheibenbremse nach Anspruch 1, **dadurch gekennzeichnet, dass** die Bremsscheibe (1) lediglich um den Weg des Arbeitshubes zumindest im Bereich ihres Reibringes axial beweglich ausgebildet oder verschieblich auf einer Radachse angeordnet ist.

4. Scheibenbremse nach Anspruch 1 oder 2, **dadurch gekennzeichnet, dass** beidseits der Bremsscheibe (1) wenigstens eine, vorzugsweise zwei, der pneumatisch betätigbaren Nachstelleinheiten (27a-d) angeordnet ist/sind.

5. Scheibenbremse nach einem der vorstehenden Ansprüche, **dadurch gekennzeichnet, dass** auf jeder Seite der Bremsscheibe (1) zwei der pneumatisch betätigbaren Nachstelleipheiten (27) angeordnet ist/sind.

6. Scheibenbremse nach einem der vorstehenden Ansprüche, **dadurch gekennzeichnet, dass** Druckräume (35) von mehreren der Nachstelleinheiten (27) mittels Druckluftleitungen und/oder -passagen (37, 40, 42) miteinander in Wirkverbindung stehen.

7. Scheibenbremse nach einem der vorstehenden Ansprüche, **dadurch gekennzeichnet, daß** die Zuspannvorrichtung (5) einen Exzenter-Drehhebel (9) aufweist, der an zwei traversenartigen seitlichen Enden jeweils auf ein Zwischenelement (11) einwirkt, das an seiner der Bremsscheibe zugewandten Seite eine Ausnehmung (77) aufweist.

8. Scheibenbremse nach Anspruch 7, **dadurch gekennzeichnet, daß** die Zwischenelemente (11) im Bremssattel (3) verschieblich geführt sind.

9. Scheibenbremse nach Anspruch 7 oder 8, **dadurch gekennzeichnet, daß** sich die Zwischenelemente (11) über Druckstangen (15) an axial im Bremssattel (3) beweglichen Kolben (17) abstützen.

10. Scheibenbremse nach Anspruch 9, **dadurch gekennzeichnet, daß** die Kolben (17) an den vom Drehhebel (1) abgewandten Enden jeweils eine Druckfläche (20) aufweisen, die druckstückartig an einer Belagbalteplatte (21) anliegen.

11. Scheibenbremse nach Anspruch 9 oder 10, **dadurch gekennzeichnet, daß** die Nachstelleinheiten (27) jeweils einen der Kolben (17) und eine der Druckstangen (15) aufweisen, welche über ein nichtselbsthemmendes Gewinde (19) miteinander verschraubt sind.

12. Scheibenbremse nach Anspruch 11, **dadurch gekennzeichnet, daß** die Druckstange (15) und der Kolben (17) jeder Nachstelleinheit bei Zuspannbewegungen relativ zueinander unverdrehbar und bei Nachstellbewegungen relativ zueinander verdrehbar sind.

13. Scheibenbremse nach einem der Ansprüche 9 bis 12, **dadurch gekennzeichnet, daß** die Kolben (17) jeweils in eine Ausnehmung (25) im Bremssattel (3) eingesetzt sind.

14. Scheibenbremse nach einem der Ansprüche 11 bis 13, **dadurch gekennzeichnet, daß** die Kolben (17) u-förmig ausgebildet sind, wobei die Grundseite der U-förmigen Kolben (17) zur Bremsscheibe (1) weist und wobei jeder Kolben (17) nach innen hin einen mittigen Ansatz (31) aufweist, welcher eine mit Innengewinde versehene Bohrung (33) aufweist, in welche die Druckstange (15) eingeschraubt ist.

15. Scheibenbremse nach einem der Ansprüche 9 bis 14, **dadurch gekennzeichnet, daß** an der an der von der Grundseite des U abgewandten Seite der Kolben (17) jeweils der Druckraum (35) im Bremssattel (3) oder zwischen den Zwischenelementen (11) und den Kolben (17) ausgebildet ist.

16. Scheibenbremse nach einem der vorstehenden Ansprüche, **dadurch gekennzeichnet, daß** am Bremssattel (3) ein Druckluftanschluß (38) ausgebildet ist.

17. Scheibenbremse nach einem der Ansprüche 11 bis 16, **dadurch gekennzeichnet, daß** die Druckstange (15) jeder Nachstelleinheit (27a-d) an ihrem von der Bremsscheibe (1) abgewandten Ende mit einem Ringansatz (39) versehen ist, welcher an der zur Bremsscheibe (1) weisenden Stirnseite eine Konusfläche (41) aufweist, die sich an einer entsprechend ausgestalteten Konusfläche (43) eines Stützlagerringes (45) abstützt, der vorzugsweise auf der Zuspannseite am Zwischenelement (11) und auf der Reaktionsseite am Bremssattel (1) abgestützt ist.

18. Scheibenbremse nach Anspruch 17, **dadurch gekennzeichnet, daß** zwischen den Konusflächen (41, 43) eine Verzahnung ausgebildet ist.

19. Scheibenbremse nach einem der Ansprüche 17 oder 18, **dadurch gekennzeichnet, daß** sich der Ringansatz (39) auf seiner vom Konus (41) Seite an einem Drucklager (47) abstützt, das an seiner dem Ringansatz (39) abgewandten Seite an einer Tellerfeder (53) anliegt und begrenzt axial verschieblich ist.

20. Scheibenbremse nach Anspruch 19, **dadurch gekennzeichnet, daß** sich die Tellerfeder (53) an ihrer von der Scheibe (49) abgewandten Seite an einem Sicherungsring (55) abstützt, der in eine umlaufende Nut (57) im Bremssattel (1) oder im Zwischenelement (11) eingreift.

21. Scheibenbremse nach einem der vorstehenden Ansprüche, **dadurch gekennzeichnet, daß** jeder Nachstelleinheit (27a-d) einzweiter Druckraum (61) zum Lösen der Verzahnung zwischen den Konusflächen zum Rückstellen der Kolben beim Bremsbelagwechsel zugeordnet ist.

22. Scheibenbremse nach einem der Ansprüche 11 bis 21, **dadurch gekennzeichnet, daß** axial hinter den von der Bremsscheibe abgewandten axialen Ende der Druckstangen (15) im Bereich hinter den Stützlagerringen eine Metall-Membrane (59) angeordnet ist, die den zweiten Druckraum (61) begrenzt.

23. Scheibenbremse nach einem der Ansprüche 21 oder 22, **dadurch gekennzeichnet, daß** in den zweiten Druckraum (61) im Bremssattel (3) eine Druckluftzuleitung (63) im Bremssattel (3) mündet, die mit einem weiteren Druckluftanschluß an der Außenseite des Bremssattels (3) verbunden ist.

24. Scheibenbremse nach einem der Ansprüche 22 oder 23, **dadurch gekennzeichnet, daß** zwischen der Metall-Membrane (59) und der Druckstange (15) eine in eine zentrische Ausnehmung (65) auf der Stirnseite der Druckstange (15) und in eine zentrische Ausnehmung (67) der Metallmembrane (59) eingreifende Kugel (69) angeordnet ist.

25. Scheibenbremse nach einem der Ansprüche 7 bis 24, **dadurch gekennzeichnet, daß** Nachstelleinheiten (27a-d) mit Ausnahme der Druckwalzen (14) und Zwischenstücke (11) auf der Zuspannseite und der Reaktionsseite der Scheibenbremse gleich ausgebildet sind.

26. Scheibenbremse nach einem der Ansprüche 7 bis 25, **dadurch gekennzeichnet, daß** zwischen dem bremsscheibenzugewandten Enden jedes Zwischenstückes (11) und der das Zwischenstück jeweils aufnehmenden Bremssattelwandung ein Rollbalg (73) angeordnet ist.

27. Scheibenbremse nach einem der Ansprüche 14 bis 26, **dadurch gekennzeichnet, daß** jede Bohrung (33) in den Kolben (17) mit Hilfe einer Verschlussscheibe (75) an der den Bremsbelägen zugewandten Seite verschlossen ist

28. Scheibenbremse nach einem der vorstehenden Ansprüche 14 bis 27, **dadurch gekennzeichnet, daß** eine Verdrehsicherung für die Kolben (17) durch korrespondierende Mittel zur Verdrehsicherung zwischen den Belaghalteplatten (21) der Bremsbeläge (23, 24) und den Kolben (17) vorgesehen ist

29. Scheibenbremse nach einem der vorstehenden Ansprüche 14 bis 28, **dadurch gekennzeichnet, daß** eine roll- oder faltenbalgartige Kappe (79) den Spaltes zwischen dem Umfang der Kolben (17) und dem Bremssattel (3) an den der Bremsscheibe (1) zugewandten Endbereichen der Kolben (17) vorgesehen ist.

30. Scheibenbremse nach einem der Ansprüche 14 bis 29, **dadurch gekennzeichnet, daß** im Spalt zwischen dem Umfang der Kolben (17) und dem Bremssattel (3) jeweils ein umlaufender Dichtring 81 zur Abdichtung der Druckraumes (35) angeordnet ist.

## Claims

1. Pneumatically actuated disk brake, in particular for commercial vehicles, comprising
(a) a single-part or multi-part brake calliper (3) overlapping a brake disk (1) and adapted to be pivoted or displaced relative to a wheel axle or hub,
(b) a brake application means (5) disposed in said brake calliper (3) for applying the brake;
(c) at least one adjustment device for compensating wear on the brake lining,
**characterised in that**
(d) said adjustment device comprises at least one adjusting unit (27) adapted to be actuated independently of said brake application means directly by means of compressed air.

2. Disk brake according to Claim 1, **characterised in that** said brake calliper is configured as fixed calliper and said brake disk (1) is configured for axial movement at least in the zone of its friction ring or is disposed for displacement on a wheel axle.

3. Disk brake according to Claim 1, **characterised in that** said brake disk (1) is configured for axial movement merely around the path of the working stroke at least in the zone of its friction ring or is disposed for displacement on a wheel axle.

4. Disk brake according to Claim 1 or 2, **characterised in that** at least one, preferably two of said pneumatically operable adjustment units (27a-d) is/are arranged on either side of said brake disk (1).

5. Disk brake according to any of the preceding Claims, **characterised in that** two of said pneumatically operable adjustment units (27) are disposed on either side of said brake disk (1).

6. Disk brake according to any of the preceding Claims, **characterised in that** pressurised spaces (35) of several ones of said adjustment units (27) are operatively connected to each other by means of compressed-air lines and/or passages (37, 40, 42).

7. Disk brake according to any of the preceding Claims, **characterised in that** said brake application device (5) comprises an eccentric rotating lever (9) that acts on two lateral ends resembling cross-beams upon a respective interposed element (11) that presents a recess (77) on its side facing said brake disk.

8. Disk brake according to Claim 7, **characterised in that** said interposed elements (11) are guided for displacement in said brake calliper (3).

9. Disk brake according to Claim 7 or 8, **characterised in that** said interposed elements (11) are supported via push rods (15) on pistons (17) axially mobile in said brake calliper (3).

10. Disk brake according to Claim 9, **characterised in that** each of said pistons (17) presents a respective pressure area (20) on the ends turned away from said rotating lever (1), which bear against a lining-holding plate (21) in the manner of a pressing element.

11. Disk brake according to Claim 9 or 10, **characterised in that** each of said adjustment units (27) presents one of said pistons (17) and one of said push rods (15), which are screwed to each other via a non-self-locking thread (19).

12. Disk brake according to Claim 11, **characterised in that** said push rod (15) and said piston (17) on each adjustment unit are adapted to be prevented from rotation relative to each other during brake application movements and to be rotated relative to each other during adjustment movements.

13. Disk brake according to any of the Claims 9 to 12, **characterised in that** each of said pistons (17) is inserted into a recess (25) in said brake calliper (3).

14. Disk brake according to any of the Claims 11 to 13, **characterised in that** said pistons (17) have a U-shaped configuration, with the base part of said U-shaped pistons (17) facing towards said brake disk (1), wherein each piston (17) presents a central lug (31) towards the inside, which presents a bore (33) provided with an internal thread into which said push rod (15) is screwed.

15. Disk brake according to any of the Claims 9 to 14, **characterised in that** on the side of said pistons (17), which is turned away from the base side of the U, said pressurised space (35) is formed in said brake calliper (3) or between said interposed elements (11) and said pistons (17).

16. Disk brake according to any of the preceding Claims, **characterised in that** a compressed-air port is formed on said brake calliper (3).

17. Disk brake according to any of the Claims 11 to 16, **characterised in that** the push rod (15) of each adjustment unit (27a-d) is provided with an annular lug (39) on its end turned away from said brake disk, which lug presents a conical surface (41) on the face side facing said brake disk (1), which conical surface is supported on an appropriately configured conical surface (43) of a support bearing ring (45) that is preferably supported on the brake-application side on said interposed element (11) and on the reaction side on said brake calliper (1).

18. Disk brake according to Claim 17, **characterised in that** a toothing is formed between said conical surfaces (41, 43).

19. Disk brake according to any of the Claims 17 or 18, **characterised in that** said annular lug (39) is supported by its side turned away from said cone (41) on a thrust bearing that bears against a disk spring (53) on its side turned away from said annular lug and that is adapted for limited axial displacement.

20. Disk brake according to Claim 19, **characterised in that** said disk spring (53) is supported on a locking ring (55) on its side turned away from said disk (49), which engages in a peripheral groove (57) in said brake calliper (1) or in said interposed element (11).

21. Disk brake according to any of the preceding Claims, **characterised in that** a second pressurised space (61) is associated with each adjustment unit (27a-d) for disengagement of the toothing between said conical surfaces for resetting said pistons when the brake lining is replaced.

22. Disk brake according to any of the Claims 11 to 21, **characterised in that** a metal membrane (59) is disposed axially behind the axial end of said push rods (15), which are turned away from said brake disk, in the zone behind said support bearing rings, which membrane defines said second pressurised space (61).

23. Disk brake according to any of the Claims 21 or 22, **characterised in that** a compressed-air supply line (63) in said brake calliper opens into said second pressurised space (61) in said brake calliper (3), which supply line is connected to a further compressed-air port on the outside of said brake calliper (3).

24. Disk brake according to any of the Claims 22 or 23, **characterised in that** a sphere (69) engaging in a centric recess (65) on the face side of said push rod (15) and in a centric recess (67) of said metal membrane (59) is arranged between said metal membrane (59) and said push rod (15).

25. Disk brake according to any of the Claims 7 to 24, **characterised in that** adjustment units (27a-d), with the exception of said pressure rollers (14) and interposed elements (11), are equally configured on the brake-application side and the reaction side of said disk brake.

26. Disk brake according to any of the Claims 7 to 25, **characterised in that** rolling bellows (73) are arranged between the ends of each interposed element (11), which face said brake disk, and the respective brake calliper wall receiving said interposed element.

27. Disk brake according to any of the Claims 14 to 26, **characterised in that** each bore (33) in said pistons (17) is closed by means of a closing disk (75) on the side facing said brake linings.

28. Disk brake according to any of the Claims 14 to 27, **characterised in that** an anti-rotation lock is provided for said pistons (17) by corresponding anti-rotation locking means between said lining-holding plats (21) of said brake linings (23, 24) and said pistons (17).

29. Disk brake according to any of the Claims 14 to 28, **characterised in that** a cap (79) of the type of rolling or fold-type bellows is provided in the gap between the periphery of said pistons (17) and said brake calliper (3) on the terminal zones of said pistons (17), which are facing said brake disk (1).

30. Disk brake according to any of the Claims 14 to 29, **characterised in that** in the gap between the periphery of said pistons (17) and said brake calliper (3) a respective peripheral sealing ring (81) is disposed for sealing said pressurised space (35).

## Revendications

1. Frein à disque à actionnement pneumatique, en particulier pour des véhicules utilitaires, comprenant
a) un étrier (3) de frein en une ou plusieurs parties, enjambant un disque (1) de frein et pouvant pivoter ou coulisser par rapport à un essieu ou un moyeu,
b) un dispositif (5) de serrage disposé dans l'étrier (3) de frein pour serrer le frein ;
c) au moins un dispositif de rattrapage de jeu pour compenser l'usure des garnitures de frein,
**caractérisé en ce que**
d) le dispositif de rattrapage de jeu comporte au moins une unité (27) de rattrapage de jeu pouvant être actionnée directement par de l'air comprimé indépendamment du dispositif de serrage du frein.

2. Frein à disque suivant la revendication 1, **caractérisé en ce que** l'étrier de frein est conçu comme étrier fixe et le disque (1) de frein est disposé à coulissement sur un essieu ou est réalisé axialement mobile au moins dans la région de sa bague de friction.

3. Frein à disque suivant la revendication 1, **caractérisé en ce que** le disque (1) de frein est disposé à coulissement sur un essieu ou est réalisé axialement mobile au moins dans la région de sa bague de friction uniquement de la valeur de la course de travail.

4. Frein à disque suivant la revendication 1 ou 2, **caractérisé en ce qu'**au moins une et de préférence deux unités (27a-d) de rattrapage de jeu à actionnement pneumatique sont disposées de chaque côté du disque (1) de frein.

5. Frein à disque suivant l'une des revendications précédentes, **caractérisé en ce que** deux unités (27) de rattrapage de jeu à actionnement pneumatique sont disposées de chaque côté du disque (1) de frein.

6. Frein à disque suivant l'une des revendications précédentes, **caractérisé en ce que** des chambres de pression (35) de plusieurs des unités (27) de rattrapage de jeu sont fonctionnellement reliées entre elles au moyen de conduites et/ou de passages (37, 40, 42) d'air comprimé.

7. Frein à disque suivant l'une des revendications précédentes, **caractérisé en ce que** le dispositif (5) de serrage du frein comporte un levier (9) tournant excentrique qui, à deux extrémités latérales du genre traverses, agit sur un élément (11) intermédiaire respectif qui possède un évidement (77) sur son côté tourné vers le disque de frein.

8. Frein à disque suivant la revendication 7, **caractérisé en ce que** les éléments (11) intermédiaires sont guidés en coulissement dans l'étrier (3) de frein.

9. Frein à disque suivant la revendication 7 ou 8, **caractérisé en ce que** les éléments (11) intermédiaires s'appuient par l'intermédiaire de tiges (15) de pression sur des pistons (17) axialement mobiles dans l'étrier (3) de frein.

10. Frein à disque suivant la revendication 9, **caractérisé en ce que** les pistons (17) comportent, aux extrémités opposées au levier (9) tournant, une surface (20) de pression respective qui s'applique à la manière d'une pièce de pression sur une plaque (21) porte-garnitures.

11. Frein à disque suivant la revendication 9 ou 10, **caractérisé en ce que** les unités (27) de rattrapage de jeu comprennent chacune un des pistons (17) et une des tiges (15) de pression, qui sont mutuellement reliés par vissage au moyen d'un filetage (19) non autobloquant.

12. Frein à disque suivant la revendication 11, **caractérisé en ce que** la tige (15) de pression et le piston (17) de chaque unité de rattrapage de jeu sont sans possibilité de rotation relative lors de mouvements de serrage du frein et à rotation relative lors de mouvements de rattrapage de jeu.

13. Frein à disque suivant l'une des revendications 9 à 12, **caractérisé en ce que** les pistons (17) sont insérés dans un évidement (25) respectif dans l'étrier (3) de frein.

14. Frein à disque suivant l'une des revendications 11 à 13, **caractérisé en ce que** les pistons (17) sont réalisés en forme de U, le côté de base des pistons (17) en forme de U étant tourné vers le disque (1) de frein et chaque piston (17) comportant vers l'intérieur un appendice central (31), qui comporte un perçage (33) doté d'un taraudage dans lequel est vissée la tige (15) de pression.

15. Frein à disque suivant l'une des revendications 9 à 14, **caractérisé en ce que** la chambre (35) de pression respective est formée dans l'étrier (3) de frein ou entre les éléments (11) intermédiaires et les pistons (17) sur le côté des pistons (17) qui est opposé au côté de base du U.

16. Frein à disque suivant l'une des revendications précédentes, **caractérisé en ce qu'**un branchement (38) d'air comprimé est formé sur l'étrier (3) de frein.

17. Frein à disque suivant l'une des revendications 11 à 16, **caractérisé en ce que** la tige (15) de pression de chaque unité (27a-d) de rattrapage de jeu est pourvue, à son extrémité opposée au disque (1) de frein, d'un appendice (39) annulaire qui comporte, sur son côté frontal tourné vers le disque (1) de frein, une surface (41) conique qui s'appuie sur une surface (43) conique de forme correspondante d'une bague (45) de palier de soutien, qui s'appuie de préférence du côté de serrage du frein sur l'élément (11) intermédiaire et du côté de réaction sur l'étrier (3) de frein.

18. Frein à disque suivant la revendication 17, **caractérisé en ce qu'**un engrènement est formé entre les surfaces (41, 43) coniques.

19. Frein à disque suivant la revendication 17 ou 18, **caractérisé en ce que** l'appendice (39) annulaire s'appuie, sur son côté opposé à la surface (41) conique, sur un palier (47) de pression, qui s'applique sur son côté opposé à l'appendice (39) annulaire contre une rondelle-ressort (53) et est à coulissement axial limité.

20. Frein à disque suivant la revendication 19, **caractérisé en ce que** la rondelle-ressort (53) s'appuie, sur son côté opposé à la rondelle (49), sur un jonc (55) d'arrêt qui s'engage dans une rainure (57) entourante dans l'étrier (3) de frein ou dans l'élément (11) intermédiaire.

21. Frein à disque suivant l'une des revendications précédentes, **caractérisé en ce qu'**une deuxième chambre (61) de pression est associée à chaque unité (27a-d) de rattrapage de jeu pour supprimer l'engrènement entre les surfaces coniques afin de rappeler les pistons lors du remplacement des garnitures de frein.

22. Frein à disque suivant l'une des revendications 11 à 21, **caractérisé en ce qu'**une membrane (59) métallique, qui limite la deuxième chambre (61) de pression, est disposée axialement en arrière de l'extrémité axiale des tiges (15) de pression qui est opposée au disque de frein, dans la région située en arrière des bagues de palier de soutien.

23. Frein à disque suivant la revendication 21 ou 22, **caractérisé en ce qu'**une conduite (63) d'apport d'air comprimé débouche dans l'étrier (3) de frein dans la deuxième chambre (61) de pression formée dans l'étrier (3) de frein, conduite qui est reliée à un autre branchement d'air comprimé sur le côté extérieur de l'étrier (3) de frein.

24. Frein à disque suivant la revendication 22 ou 23, **caractérisé en ce qu'**une bille (69) est disposée entre la membrane (59) métallique et la tige (15) de pression, bille qui s'engage dans un évidement (65) central sur le côté frontal de la tige (15) de pression et dans un évidement (67) central de la membrane (59) métallique.

25. Frein à disque suivant l'une des revendications 7 à 24, **caractérisé en ce que** les unités (27a-d) de rattrapage de jeu sont réalisées identiques sur le côté de serrage et sur le côté de réaction du frein à disque, à l'exception des rouleaux (14) de pression et des éléments (11) intermédiaires.

26. Frein à disque suivant l'une des revendications 7 à 25, **caractérisé en ce qu'**un soufflet (73) roulant est disposé entre l'extrémité de chaque élément (11) intermédiaire qui est tournée vers le disque de frein et la paroi de l'étrier de frein qui reçoit l'élément intermédiaire respectif.

27. Frein à disque suivant l'une des revendications 14 à 26, **caractérisé en ce que** chaque perçage (33) dans les pistons (17) est fermé à l'aide d'une rondelle (75) d'obturation sur le côté qui est tourné vers les garnitures de frein.

28. Frein à disque suivant l'une des revendications 14 à 27, **caractérisé en ce qu'**il est prévu un blocage en rotation pour les pistons (17), par des moyens correspondants de blocage en rotation entre les plaques (21) porte-garnitures des garnitures (23, 24) de friction et les pistons (17).

29. Frein à disque suivant l'une des revendications 14 à 28, **caractérisé en ce qu'**il est prévu une coiffe (79) du genre soufflet roulant ou plissé pour recouvrir la fente entre le pourtour des pistons (17) et l'étrier (3) de frein dans les régions terminales des pistons (17) qui sont tournées vers le disque (1) de frein.

30. Frein à disque suivant l'une des revendications 14 à 29, **caractérisé en ce qu'**un joint (81) d'étanchéité annulaire entourant respectif est disposé dans la fente entre le pourtour des pistons (17) et l'étrier (3) de frein afin d'assurer l'étanchéité des chambres (35) de pression.
